# EUROPEAN PATENT SPECIFICATION

(11) **EP 1 977 559 B1**
(45) Date of publication and mention of the grant of the patent: **27.07.2011**
(21) Application number: 06701277.3
(22) Date of filing: 23.01.2006
(51) Int. Cl.: H04L 12/28, H04L 29/06

(54) **Communication network access**
Kommunikationsnetzzugang
Accès à un réseau de communication

(43) Date of publication of application: 08.10.2008
(73) Proprietor: Telefonaktiebolaget LM Ericsson (publ), 16483 Stockholm (SE)
(72) Inventor: ARKKO, Jari, 02700 Kauniainen (FI); RINTA-AHO, Teemu, 02360 Espoo (FI); MELÉN, Jan, 02280 Espoo (FI)
(74) Representative: Norin, Klas
(86) International application number: PCT/EP2006/050357
(87) International publication number: WO 2007/082588

(56) References cited:
- ZAO J ET AL: "A PUBLIC-KEY BASED SECURE MOBILE IP12" MOBICOM. PROCEEDINGS OF THE ANNUAL INTERNATIONAL CONFERENCE ON MOBILE COMPUTING AND NETWORKING, XX, XX, 26 September 1997 (1997-09-26), pages 173-184, XP000764777
- CHENG A-T ET AL: "Secure transparent mobile IP for intelligent transportation systems" NETWORKING, SENSING AND CONTROL, 2004 IEEE INTERNATIONAL CONFERENCE ON TAIPEI, TAIWAN MARCH 21-23, 2004, PISCATAWAY, NJ, USA,IEEE, vol. 1, 21 March 2004 (2004-03-21), pages 495-500, XP010705403 ISBN: 0-7803-8193-9
- KENT S ET AL: "RFC 2401 - Security Architecture for the Internet Protocol" IETF PUBLICATION, November 1998 (1998-11), XP002218816

## Description

### Field of the Invention

The present invention relates to a method and apparatus for facilitating access to a communication network. The invention is applicable in particular, though not necessarily, to facilitating access to a communication network via a wireless access network.

### Background

Wireless access networks enable mobile users to access the services offered by a range of communication networks. A prime example of such a communication network is the Internet. Another example is a telephone network. Today, the most widely used wireless access networks are cellular telephone radio access networks such as are provided by the operators of GSM and 3G networks. These access networks are publicly available insofar as anyone having a valid subscription (including pre-paid accounts) can make use of the access network. Other types of wireless access networks are also available. For example, the introduction of WLAN networks in cafes, libraries, airports, etc, allows mobile users to make use of the WLAN services either free of charge or for a small fee.

### Summary

The number of wireless access networks which could be used by roaming mobile users is much greater than the number which are actually used. Take for example the large number of home and corporate WLANs which are presently closed to users who do not "belong" to the homes or companies where the WLANs reside but which offer relatively high speeds and capacities. These are closed for a number of reasons including:
- A private network owner does not want to allow others to take a free ride on his or her investment or worse, allow others to incur costs on the part • of the private network owner;
- In order to ensure that sufficient network capacity is available to home/company users;
- To ensure that the access network is not used for illegal purposes; and
- Technical reasons which make public access to private networks impractical.

As an example of a technical difficulty, one might consider a private network which requires that users be authenticated to it, in which case it may be necessary to configure a key in the roaming mobile terminals. Particularly in the case of home-based networks, this is not something that either the home owner (e.g. family) or mobile user would want to do (on a regular basis). It might of course be possible to allow private network operators to participate in existing roaming consortiums and to be set up with the necessary technology (based for example on the Authentication Authorisation and Accounting (AAA) standard However, in practise this is unrealistic due to a number of technical and other limitations, namely:
- Setting AAA connections is demanding even for experts, let alone the general public. The existing protocols require a large number of parameters to be agreed upon, particularly where RADIUS is used [IETF RFC2865].
- The characteristics of AAA systems do not make them suitable for large scale roaming connections among multiple levels of players [I-D.ietf-eap-netsel-problem]. For instance, there is a lack of an automatic routing mechanism which forces transaction routing within the network of interconnected providers to be manually configured.
- The commercial requirements for acceptance into a roaming consortium (or being able to provide "peering" over AAA) are too high for most private networks. It is unlikely that a AAA proxy from a private network would be allowed to connect to the AAA network of a major provider, for instance.

Any solution which facilitates external access to a communication network via a private network should satisfy the following requirements:
- Such network service should be arranged automatically, i.e., without the involvement of either the owner or the users (perhaps with the exception of turning the feature on).
- Different compensation and business models should be supported, in case private network operators require compensation.
- The solution should accommodate tracking of illegal activities to an extent similar to existing, commercially deployed Internet access solutions.
- The solution should be suitable for both single-hop and multi-hop solutions, i.e. the entity providing network access can be either directly connected to a real public access network or gains access through some other private network(s).

According to a first aspect of the present invention there is provided a method of routing traffic between external users and a communication network via a private access network, the method comprising:
establishing a secure outer tunnel between the private network and a gateway of a public access network to which the private network is coupled,
based upon authentication of the private network to the public access network, said gateway being coupled to said communication network;
for each external user wishing to connect to the communication network via the private network, establishing a secure Inner tunnel between the external user and the gateway based upon authentication of the external user to the gateway, the inner tunnel being within said outer tunnel;
causing traffic to flow between external users and the gateway through the respective inner tunnels;
within said public access network, using said inner and outer tunnels to determine an amount of external traffic routed between the external users and the internet by the private access network; and
applying appropriate compensation to an operator of said private access network in dependence upon said determined amount of external traffic..

The term "external users" encompasses a range of entities including but not limited to devices, subscribers utilising one or more devices, and SIM/USIM cards used in one or more devices.

Embodiments of the invention allow the public access network of the private network to determine exactly which traffic associated with external users is routed via the private network. This allows the public access network to, for example, allocate an appropriate monetary credit, or other bonus, to the private network operator. On the other hand, the public access network is able to determine the identity of the external user associated with particular traffic based upon the owner of the inner tunnel through which that traffic is carried.

It is the role of the private network to cause traffic received from an external user to flow through the outer tunnel. This involves encapsulating the received traffic according to the outer tunnel security procedures. Similarly, the private network decapsulates traffic arriving from the gateway and destined for an external user. The gateway on the other hand encapsulates and decapsulates according to both the inner and outer tunnels, whilst the external user encapsulates and decapsulates only according to the inner tunnel.

In some embodiments of the invention, the outer tunnel carries only traffic which travels through the inner tunnels. Other embodiments may allow the private network to send its own traffic through the outer tunnel, not within an inner tunnel. In this case, the gateway will recognise that this traffic belongs to the private network as it is not transported through an inner tunnel.

The communication network to which the private network facilitates access may be the Internet.

The public access network of the private network may be a fixed line or cellular telecommunications network.

Preferably, said outer and inner tunnels are IPSec tunnels defined by IKE SAs negotiated between the private network and a gateway of the public access network and between the external users and that gateway.

Authentication of an external user to a gateway may be performed within said public access network, or may involve the public access network communicating with a further network where the user is a subscriber of that further network.

In its simplest form, the private network is a single node attached to the public access network via a wireless or wired connection. The private network may also consist of a set of nodes internally connected over either wireless or wired links.

The Invention Is applicable in particular to private wireless networks. The private network may be a WLAN network, e.g. home or corporate, or a network provided by a single device having wireless connectivity. External users having appropriate wireless connectivity are allowed to roam between private wireless networks and public wireless networks such as GSM and 3G networks.

Said gateway may be configured to reject requests to establish secure tunnels with external users which will not pass through said external tunnel.

According to a second aspect of the present invention there is provided a gateway for controlling access by external users to a communication network, the gateway being located within a public access network, the gateway comprising:
means for establishing a secure outer tunnel between a private network and the gateway;
means for establishing a secure inner tunnel between each external user wishing to connect to the communication network via the private network and the gateway based upon authentication of the external user to the gateway, the inner tunnel being within said outer tunnel;
means for associating traffic travelling through an inner tunnel with a corresponding external user and with the private network; and said means for associating traffic is also arranged to determine an amount of external traffic routed between the external users and the Internet by the private access network. >

### Brief Description of the Drawings

Figure 1 illustrates schematically a scenario where an external user accesses the Internet via a private network; and
Figure 2 is a flow diagram illustrating a method for allowing an external user to access a communication network via a private access network.

### Detailed Description

As has been set out above, it is desirable in some circumstances to allow a roaming mobile user possessing a wireless enabled (or possibly wireline connected) terminal, e.g. a smartphone, PDA, laptop, etc, to access a communication network via what is essentially a private access network. An example of a private network is a home or corporate WLAN. Suitable private networks will be connected to a public access network such as might be owned and operated by a telecommunication network operator to allow users to connect to the "outside world". The private network operator will pay the telecommunication network operator for this service, typically on the basis of a regular subscription and/or a pay-per-use basis.

The definition of a private network encompasses the typical home and corporate WLANs. However, it also extends to encompass any suitable device or system that provides wireless coverage over a surrounding area. Examples include Bluetooth™ and WLAN enabled devices. The private network will establish a tunnel or tunnels with the public access network for routing traffic originating within the private network and destined for the private network, i.e. associated with the private networks own client(s), according to conventional practice.

A necessary preliminary step in the process of allowing roaming mobile ("external") users to make use of a private access network is the setting up of an IP level tunnel (the "outer" tunnel) between the private network and its public access network. Such an IP tunnel means that the private network does not need to be directly connected to its public access network. This is relevant for example where the private network is provided by a device such as a smartphone or PDA which is able to connect to a public access network via a visited (or "foreign") network. The tunnel is established using Internet Key Exchange (IKEv2) [I-D.ieff-ipsec-ikev2] to a gateway node within the public access network. The gateway node's address is either preconfigured or calculated according to some known procedure (see, e.g., [3GPP.24.234]). IKEv2 may possibly use its Extensible Authentication Protocol (EAP) mode so that typical network access credentials can be employed. For example, a cellular wireless LAN smartphone could use SIM or USIM cards to authenticate itself when attaching to a particular network as well as when communicating with the (IKEv2) gateway. This first run of the IKE procedure results in a pair of IKE Security Associations (SAs) being established between the private network and the public access network.

Access to the resources of the private network may be controlled by the private network operator to ensure that sufficient capacity is available for home users. However, when the resource situation allows, the private network may offer network access to other external mobile users. No authentication is required for these external users at the link layer (i.e. at establishment of a radio link between the external user and the private network). However, the private network forces all externally originating traffic through the established outer tunnel over the link between the private and public access network. In the same way, the gateway will force all traffic destined for an external user through the same tunnel. The appropriate processing node within the private network and the gateway perform reciprocal sender-receiver roles.

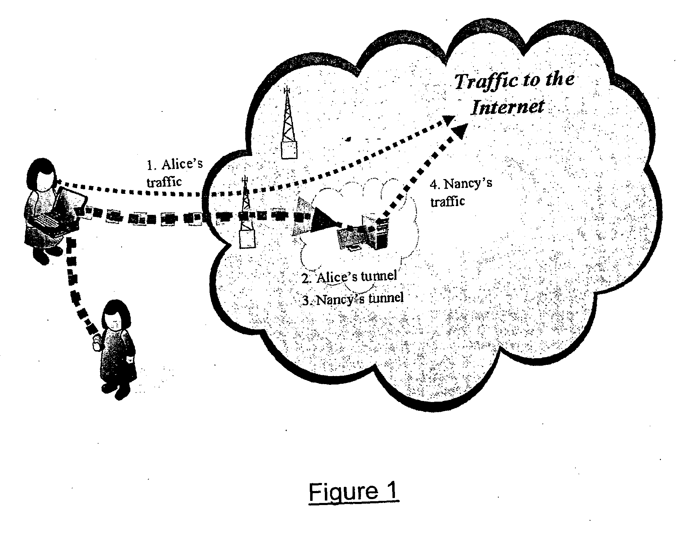

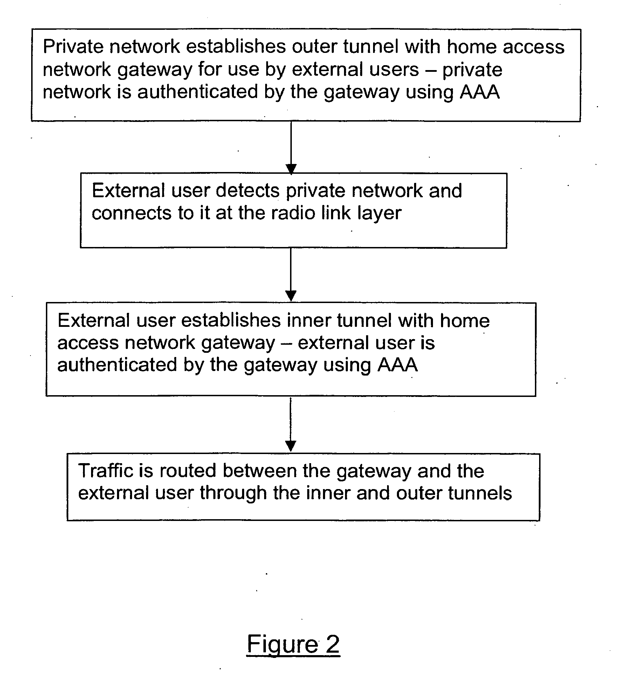

Prior to routing any externally related traffic through the outer tunnel however, an external user must be authenticated to the gateway within the public access network. This may be done by the gateway contacting the Home Location Register of the associated core network using standard AAA procedures. If the external user belongs to some other network, the gateway must authenticate the external user by contacting the user's home network, again using AAA procedures. Assuming that the authentication is successful, a new IPsec SA pair in IKEv2 is established using the Create Child SA Exchange, and the private network allocates an IP address to the external user. As a result, for each external user, an "inner" tunnel is created within the outer tunnel extending between the user and the gateway. Once the inner tunnel is set up, the external user can start sending traffic to the Internet or other communication network, via the gateway. This is illustrated in Figure 1, where the private network is illustrated as being a WLAN enabled laptop computer belonging to "Alice", while the external user making use of Alice's private network is "Nancy". The communication network to which Nancy gains access is the Internet. Packets are "encapsulated" at the outermost level with the SAs associated with the outer tunnel and at a second level with the SAs associated with the appropriate inner tunnel. The gateway will reject any request received from an external user, through the outer tunnel, to establish a tunnel which is not within the outer tunnel. The flow diagram of Figure 2 further illustrates this procedure.

As a result of the procedure described above, the public access network used by the private network can associate all traffic passing through it with both a private network and an external user. The public access network can thus determine the amount of external traffic routed by a private network and can apply appropriate compensation to the private network operator (compensation may be monetary, traffic credits, etc). In addition, or alternatively, the public access network may use the access provided by the private network to authorise users of the private network to roam into other private networks (i.e. to enable reciprocal roaming between private networks). At the same time, the public access network will be able to distinguish between traffic originating at the private network and external traffic routed via the public access network. This is important, for example, to facilitate legal interception and to determine responsibility for illegal traffic.

Whilst it is known to establish nested tunnels between end points and intermediate nodes (see, for example, EP1280300 and "A Public Key based Secure Mobile IP", Zao et al) it is not known to use such nested tunnels as a means for routing traffic flowing between external users and a gateway via an intermediate access network, in this case the private access network. By using inner tunnels as set out above, it is possible for the public access network to determine that certain traffic originates from an external user and is not directly associated with the private access network. Such a mechanism can therefore be used to apply monetary or other compensation to the operator of the private access network.

The (inner and outer) tunnels do not always have to be established from scratch after movements of the external users and the private network if that is also mobile. For example, when the private network moves, it may reconnect to its gateway using MOBIKE. MOBIKE is an extension of IKEv2 that allows changing the IP address of the client without recreating the tunnel. Similarly, an external user may keep its existing inner tunnel even when moving to a different private network, as long as the public access network of the private networks is the same (as otherwise a different gateway would be Involved).

A set of advertisement mechanisms may be employed at the link layer level to indicate to external users the type of service provided by a private network and under what conditions this is provided. Such advertisements may, for example, provide an indication of the applicable tariffs. An external user attaches to the private network on the basis of the advertisements.

It will be appreciated by the person of skill in the art that various modifications may be made to the above described embodiment without departing from the scope of the present invention.

### References

[I-D.ietf-ipsec-ikev2] Kaufman, C., "Internet Key Exchange (IKEv2) Protocol", draft-ietf-ipsec-ikev2-17 (work in progress), October 2004.
[I-D.ietf-mobike-protocol] Eronen, P., "IKEv2 Mobility and Multihoming Protocol (MOBIKE)", draft-ietf-mobike-protocol-00 (work in progress), June 2005.
[I-D.arkko-eap-service-identity-auth] Arkko, J. and P. Eronen, "Authenticated Service Identities for the Extensible Authentication Protocol (EAP)", draft-arkko-eap-service-identity-auth-00 (work in progress), April 2004.
[RFC2865] Rigney, C., Willens, S., Rubens, A., and W. Simpson, "Remote Authentication Dial In User Service (RADIUS)". RFC 2865, June 2000.
[RFC3588] Calhoun, P., Loughney, J., Guttman, E., Zorn, G., and J. Arkko, "Diameter Base Protocol", RFC 3588, September 2003.
[RFC3748] Aboba, B., Blunk, L., Vollbrecht, J., Carlson, J., and H. Levkowetz, "Extensible Authentication Protocol (EAP)", RFC 3748, June 2004.
[I-D.ietf-eap-netsel-probfem] Arkko, J. and B. Aboba, "Network Discovery and Selection Problem", draft-ietf-eap-netsel-problem-01 (work in progress), July 2004.
[3GPP.24.234] 3GPP, "3GPP system to Wireless Local Area Network (WLAN)"

## Claims

1. A method of routing traffic between external users and the Internet via a private access network, the method comprising:
establishing a secure outer tunnel between the private access network and a gateway of a public access network to which the private access network is coupled, based upon authentication of the private access network to the public access network, said gateway being coupled to the Internet;
for each external user wishing to connect to the internet via the private access network, establishing a secure Inner tunnel between the external user and the gateway based upon authentication of the external user to the gateway, the inner tunnel being within said outer tunnel; and
causing traffic to flow between the external users and the gateway through the respective inner tunnels,
within said public access network, using said inner and outer tunnels to determine an amount of external traffic routed between the external users and the Internet by the private access network; and
applying appropriate compensation to an operator of said private access network in dependence upon said determined amount of external traffic.

2. A method according to claim 1, wherein said outer tunnel carries only traffic which travels through the inner tunnels.

3. A method according to claim 1, wherein the private access network can send its own traffic through the outer tunnel, not within an inner tunnel.

4. A method according to any one of the preceding claims, wherein said gateway is configured to reject requests to establish secure tunnels with external users which will not pass through said external tunnel.

5. A method according to any one of the preceding claims, wherein the public access network is a fixed line or cellular telecommunications network.

6. A method according to any one of the preceding claims, wherein said outer and inner tunnels are IPSec tunnels defined by IKE SAs negotiated between the private access network and a gateway of the public access network and between the external users and that gateway.

7. A method according to any one of the preceding claims, wherein authentication of an external user to a gateway is performed within said public access network, or involves the public access network communicating with a further network where the user is a subscriber of that further network.

8. A method according to any one of the preceding claims, wherein said private access network is a single node attached to the public access network via a wireless or wired connection.

9. A method according to any one of claims 1 to 7, wherein said private access network is a private wireless network.

10. A gateway for controlling access by external users to the Internet, the gateway being located within a public access network and being coupled to the Internet, the gateway comprising:
means for establishing a secure outer tunnel between a private access network and the gateway;
means for establishing a secure inner tunnel between each external user wishing to connect to the Internet via the private access network and the gateway based upon authentication of the external user to the gateway, the inner tunnel being within said outer tunnel; and
means for associating traffic travelling through an inner tunnel with a corresponding external user and with the private access network,
said means for associating traffic is also arranged to determine an amount of external traffic routed between the external users and the Internet by the private access network.

11. A gateway according to claim 10 and comprising means for rejecting requests to establish secure tunnels with external users which will not pass through said external tunnel.

## Patentansprüche

1. Verfahren zum Routing von Verkehr zwischen externen Benutzern und dem Internet über ein privates Zugangsnetz, wobei das Verfahren umfasst:
Aufbauen eines sicheren Außentunnels zwischen dem privaten Zugangsnetz und einem Gateway eines öffentlichen Zugangsnetzes, an das das private Zugangsnetz gekoppelt ist, auf der Basis von Authentifizierung des privaten Zugangsnetzes an das öffentliche Zugangsnetz, wobei das Gateway an das Internet gekoppelt ist;
für jeden externen Benutzer, der sich über das private Zugangsnetz an das Internet anschließen will, Aufbauen eines sicheren Innentunnels zwischen dem externen Benutzer und dem Gateway auf der Basis von Authentifizierung des externen Benutzers an das Gateway, wobei sich der Innentunnel innerhalb des Außentunnels befindet; und
Bewirken, dass Verkehr zwischen den externen Benutzern und dem Gateway durch die jeweiligen Innentunnels fließt;
innerhalb des öffentlichen Zugangsnetzes Verwenden der Innen- und Außentunnels, um eine Menge von externem Verkehr zu bestimmen, der zwischen den externen Benutzern und dem Internet durch das private Zugangsnetz geroutet wird; und
Anwenden von geeigneter Kompensation an einen Betreiber des privaten Zugangsnetzes in Abhängigkeit von der bestimmten Menge des externen Verkehrs.

2. Verfahren nach Anspruch 1, worin der Außentunnel nur Verkehr trägt, der durch die Innentunnels geht.

3. Verfahren nach Anspruch 1, worin das private Zugangsnetz seinen eigenen Verkehr durch den Außentunnel senden kann, aber nicht innerhalb eines Innentunnels.

4. Verfahren nach einem der vorhergehenden Ansprüche, worin das Gateway dazu konfiguriert ist, Anforderungen abzulehnen, sichere Tunnels, die nicht durch den externen Tunnel gehen, mit externen Benutzern aufzubauen.

5. Verfahren nach einem der vorhergehenden Ansprüche, worin das öffentliche Zugangsnetz eine Festleitung oder ein zellulares Telekommunikationsnetz ist.

6. Verfahren nach einem der vorhergehenden Ansprüche, worin die Innen- und Außentunnels IPSec(Internet Protocol Security)-Tunnels sind, durch IKE(Internet Key Exchange)-SAs(Security Associations) definiert, die zwischen dem privaten Zugangsnetz und einem Gateway des öffentlichen Zugangsnetzes und zwischen den externen Benutzern und diesem Gateway ausgehandelt werden.

7. Verfahren nach einem der vorhergehenden Ansprüche, worin Authentifizierung eines externen Benutzers an ein Gateway innerhalb des öffentlichen Zugangsnetzes ausgeführt wird oder einschließt, dass das öffentliche Zugangsnetz mit einem zusätzlichen Netz kommuniziert, wo der Benutzer ein Teilnehmer dieses zusätzlichen Netzes ist.

8. Verfahren nach einem der vorhergehenden Ansprüche, worin das private Zugangsnetz ein einzelner Knoten ist, der über eine drahtlose oder drahtgebundene Verbindung an das öffentliche Zugangsnetz angeschlossen ist.

9. Verfahren nach einem der Ansprüche 1 bis 7, worin das private Zugangsnetz ein privates drahtloses Netz ist.

10. Gateway zum Steuern des Zugangs von externen Benutzern zum Internet, wobei das Gateway innerhalb eines öffentlichen Zugangsnetzes positioniert ist und an das Internet gekoppelt ist, wobei das Gateway umfasst:
Mittel zum Aufbauen eines sicheren Außentunnels zwischen einem private Zugangsnetz und dem Gateway;
Mittel zum Aufbauen eines sicheren Innentunnels zwischen jedem externen Benutzer, der sich über das private Zugangsnetz an das Internet anschließen will, und dem Gateway auf der Basis von Authentifizierung des externen Benutzers an das Gateway, wobei sich der Innentunnel innerhalb des Außentunnels befindet; und
Mittel zum Assozüeren von Verkehr, der durch einen Innentunnel geht, mit einem entsprechenden externen Benutzer und mit dem privaten Zugangsnetz,
wobei das Mittel zum Assoziieren von Verkehr auch dazu angeordnet ist, eine Menge von externem Verkehr zu bestimmen, der zwischen den externen Benutzern und dem Internet durch das private Zugangsnetz geroutet wird.

11. Gateway nach Anspruch 10, außerdem Mittel umfassend zum Ablehnen von Anforderungen, sichere Tunnels, die nicht durch den externen Tunnel gehen, mit externen Benutzern aufzubauen.

## Revendications

1. Procédé destiné à acheminer du trafic entre des utilisateurs externes et Internet via un réseau d'accès privé, le procédé comprenant les étapes ci-dessous consistant à :
établir un tunnel externe sécurisé entre le réseau d'accès privé et une passerelle d'un réseau d'accès public auquel le réseau d'accès privé est couplé, sur la base de l'authentification du réseau d'accès privé au niveau du réseau d'accès public, ladite passerelle étant couplée à Internet ;
pour chaque utilisateur externe souhaitant se connecter à Internet via le réseau d'accès privé, établir un tunnel interne sécurisé entre l'utilisateur externe et la passerelle sur la base de l'authentification de l'utilisateur externe au niveau de la passerelle, le tunnel interne étant situé dans ledit tunnel externe ;
occasionner le transit du trafic entre les utilisateurs externes et la passerelle à travers les tunnels internes respectifs ;
au sein dudit réseau d'accès public, utiliser lesdits tunnels internes et externes afin de déterminer une quantité de trafic externe acheminée entre les utilisateurs externes et Internet par le réseau d'accès privé ; et
appliquer une compensation appropriée à un opérateur dudit réseau d'accès privé en fonction de ladite quantité de trafic externe.

2. Procédé selon la revendication 1, dans lequel ledit tunnel externe ne transporte que le trafic qui transite à travers les tunnels internes.

3. Procédé selon la revendication 1, dans lequel le réseau d'accès privé peut envoyer son propre trafic à travers le tunnel externe, mais pas à travers un tunnel interne.

4. Procédé selon l'une quelconque des revendications précédentes, dans lequel ladite passerelle est configurée de manière à rejeter les demandes, visant à établir des tunnels sécurisés avec des utilisateurs externes, lesquelles ne transiteront pas à travers ledit tunnel externe.

5. Procédé selon l'une quelconque des revendications précédentes, dans lequel le réseau d'accès public est un réseau de télécommunication filaire ou un réseau de télécommunication cellulaire.

6. Procédé selon l'une quelconque des revendications précédentes, dans lequel lesdits tunnels externes et internes sont des tunnels IPSec définis par des associations de sécurité d'échange de clés Internet, IKE SA, négociées entre le réseau d'accès privé et une passerelle du réseau d'accès public et entre les utilisateurs externes et cette passerelle.

7. Procédé selon l'une quelconque des revendications précédentes, dans lequel l'authentification d'un utilisateur externe au niveau d'une passerelle est mise en oeuvre au sein dudit réseau d'accès public, ou implique que le réseau d'accès public communique avec un réseau supplémentaire où l'utilisateur est un abonné de ce réseau supplémentaire.

8. Procédé selon l'une quelconque des revendications précédentes, dans lequel ledit réseau d'accès privé est un noeud unique connecté au réseau d'accès public via une connexion sans fil ou filaire.

9. Procédé selon l'une quelconque des revendications 1 à 7, dans lequel ledit réseau d'accès privé est un réseau sans fil privé.

10. Passerelle destinée à commander un accès par des utilisateurs externes à Internet, la passerelle étant située dans un réseau d'accès public et étant couplée à Internet, la passerelle comprenant :
un moyen pour établir un tunnel externe sécurisé entre un réseau d'accès privé et la passerelle ;
un moyen pour établir un tunnel interne sécurisé entre chaque utilisateur externe souhaitant se connecter à Internet via le réseau d'accès privé et la passerelle, sur la base de l'authentification de l'utilisateur externe au niveau de la passerelle, le tunnel interne étant situé dans ledit tunnel externe ;
un moyen pour associer le trafic transitant à travers un tunnel interne à un utilisateur externe correspondant et au réseau d'accès privé ;
ledit moyen pour associer le trafic est en outre agencé de manière à déterminer une quantité de trafic externe acheminée par le réseau d'accès privé entre les utilisateurs externes et Internet.

11. Passerelle selon la revendication 10, comprenant un moyen pour rejeter les demandes, visant à établir des tunnels sécurisés avec des utilisateurs externes, lesquelles ne transiteront pas à travers ledit tunnel externe.
